# DEMANDE DE BREVET EUROPEEN

(11) **EP 1 544 041 A1**
(43) Date de publication de la demande: **22.06.2005**
(21) Numéro de dépôt: 04300891.1
(22) Date de dépôt: 15.12.2004
(51) Int. Cl.: B60R 11/02

(54) **Agencement d'une commande deportée d'un système multimedia dans un véhicule**

(30) Priorité: 19.12.2003 FR 0315052
(71) Demandeur: Renault, 92109 Boulogne Billancourt (FR)
(72) Inventeur: Dortindeguey, Nicolas, F-91190 Villiers le Bacle (FR)

(57) **Abrégé**

Agencement d'au moins un dispositif de commande d'un système multimédia à l'intérieur d'un véhicule automobile, caractérisé en ce que le dispositif de commande est déporté, par rapport au système multimédia, sur un élément de l'habitacle du véhicule situé à proximité d'un passager et localisé en dehors de la zone dédiée au conducteur de façon que ledit dispositif de commande soit directement à la portée du passager.

## Description

L'invention concerne un agencement d'un dispositif de commande d'un système multimédia à l'intérieur d'un véhicule automobile.

Pour qu'un passager puisse les utiliser facilement, les commandes d'un système multimédia doivent être aisément accessibles et simples à manipuler.

D'une manière générale, à l'intérieur d'un véhicule, les commandes d'autoradio sont localisées sur la façade de l'autoradio. Elles sont alors accessibles pour un passager avant, mais pas pour les passagers arrière. De plus, lorsque le passager avant les utilise, il risque de gêner le conducteur lorsqu'il conduit, notamment lors des changements de vitesses. En outre, très souvent, les commandes localisées en façade d'autoradio sont nombreuses, compliquées et peu aisées d'utilisation.

Il est aussi connu d'utiliser une télécommande dont peut se servir n'importe quel occupant du véhicule. Cependant cette solution présente des inconvénients. Par exemple, la télécommande risque d'être perdue dans l'habitacle du véhicule. De plus, il peut arriver qu'elle devienne momentanément inutilisable lorsque les piles permettant de la faire fonctionner sont usées.

On connaît aussi des commandes d'autoradio déportées au volant, permettant de régler le volume sonore et de choisir la fréquence radio, par exemple, qui sont simples d'utilisation mais à portée de main du conducteur uniquement. Le passager ne peut donc pas s'en servir car il risque de gêner le conducteur.

Afin de pallier ces inconvénients, l'invention a pour objet un agencement d'un dispositif de commande d'autoradio accessible pour un passager du véhicule.

L'invention a aussi pour objet un agencement d'un dispositif de commande d'un système multimédia qui soit simple et intuitif pour le passager.

L'invention a aussi pour objet l'agencement d'un dispositif de commande de radio permettant de simplifier les commandes situées en façade du système multimédia.

A cet effet, l'invention propose un agencement d'au moins un dispositif de commande du type cité ci-dessus, caractérisé en ce que le dispositif de commande est déporté, par rapport au système multimédia, sur un élément de l'habitacle du véhicule situé à proximité d'un passager et localisé en dehors de la zone dédiée au conducteur de façon que ledit dispositif de commande soit directement à la portée du passager.

Selon d'autres caractéristiques de l'invention:
- Le dispositif de commande comporte une platine dont une première extrémité est fixée, sur l'élément et connectée à des moyens permettant la transmission du signal entre le bouton et le système multimédia et dont une deuxième extrémité libre supporte au moins un moyen de sélection d'une fonction du système multimédia.
- Le moyen de sélection est une palette montée sur la platine de façon qu'elle soit actionnable par une pression exercée sur sa face inférieure.
- Le moyen de sélection est une molette.
- Le moyen de sélection est un bouton.
- L'élément de l'habitacle est un accoudoir.
- L'élément de l'habitacle est une planche de bord.
- L'élément de l'habitacle est une console.
- Le système multimédia comporte au moins un dispositif de commande déportée.
- Le véhicule comporte une unité centrale, reliée à un écran et au dispositif de commande, et apte à communiquer par l'intermédiaire de moyens d'émission et de réception, avec des moyens d'émission et de réception d'au moins un dispositif de commande.
- Le dispositif de commande est relié à un écran.

D'autres caractéristiques et avantages de l'invention apparaîtront à la lecture de la description d'exemples de réalisation de l'agencement d'un dispositif de commande d'un système multimédia aux dessins annexés dans lesquels :
- La figure 1 est une vue en perspective d'un accoudoir comportant l'agencement d'un dispositif de commande d'un système multimédia selon l'invention.
- La figure 2 est une vue schématique du dispositif de commande selon l'invention.
- La figure 3 est un schéma général représentant un exemple d'implantation de dispositifs de commande à l'intérieur d'un véhicule.

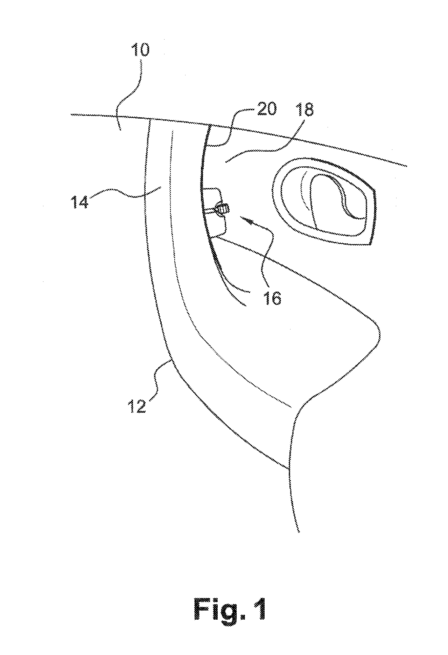

Dans la description qui va suivre on adoptera à titre non limitatif une orientation transversale, longitudinale et verticale indiquée par le trièdre X,Y,Z de la figure 1.

Tel que représenté à la figure 1, une porte 10 comporte un accoudoir 12, d'orientation longitudinale et présentant la forme globale d'un L. Un dispositif de commande 16 d'un système multimédia est agencé sur un support formé par la branche globalement verticale 14 du L. Le système multimédia (non représenté) peut être, par exemple, un autoradio, un lecteur de disques compacts ou bien un lecteur de DVD. Il peut être agencé, par exemple, à l'intérieur d'une console centrale (non représentée) du véhicule.

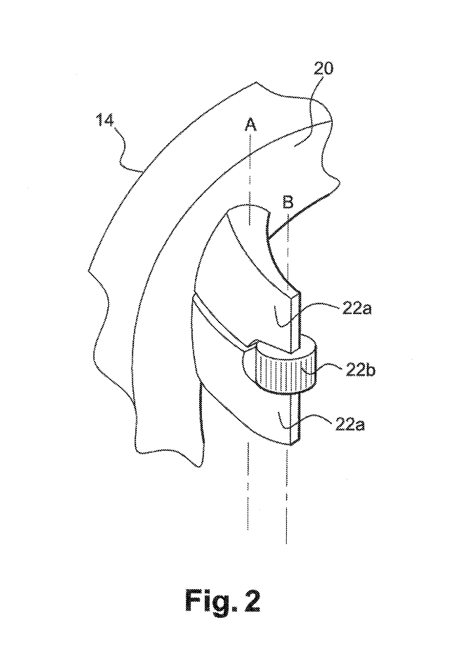

Un évidement ou un creux 18 peut être ménagé entre la partie verticale 14 de l'accoudoir et la porte 10. Ainsi, le dispositif de commande 16 de radio peut être agencé à l'intérieur de l'évidement ou du creux 18, sur un côté 20 de la partie verticale 14 de l'accoudoir Tel que représenté à la figure 2, le dispositif de commande 16 du système multimédia est monté sur une platine (non représentée) dont une partie est fixée sur le support 14 et reliée à des moyens de connexion électrique et une autre parité est munie d'au moins un moyen de sélection.

Le moyen de sélection peut être une palette 22a sensiblement plane dont la face visible peut se trouver dans le prolongement de la surface du support 14. De plus, la palette 22a est montée pivotante autour d'un axe A et déborde de la platine de façon qu'elle puisse être actionnée par une pression sur sa face inférieure (non représentée). La palette 22a peut être divisée en deux parties ayant pour fonction, par exemple, le réglage du volume sonore: une pression exercée sur la partie haute de la palette augmente le volume sonore tandis qu'une pression exercée sur la partie basse de la palette fait diminuer le volume sonore. De la même façon, la palette 22a peut aussi permettre de sélectionner les fréquences radio, ou les plages d'un disque compact.

Le moyen de sélection peut être une molette 22b, montée à rotation autour d'un axe B, dont seule une partie est visible et déborde de la palette 22a. L'axe de la molette peut aussi être longitudinal. Dans un mode de réalisation, la molette peut présenter la fonction de réglage des stations de radio ou bien de recherche des plages d'un disque compact.

Le moyen de sélection peut aussi être un bouton (non représenté), agencé, par exemple, sur un côté de la platine. Ce bouton peut avoir pour fonction la mise en pause d'un disque compact ou du volume sonore.

Les moyens de sélection 22a et 22b peuvent être combinés entre eux de façon à obtenir un dispositif de commande 16 pratique et intuitif, offrant les fonctions les plus utilisées de commande du système multimédia.

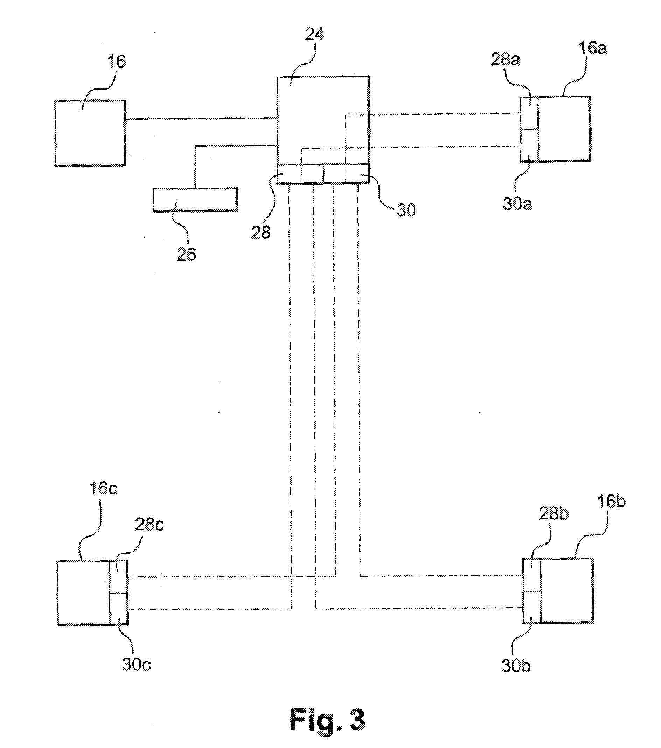

Dans l'exemple d'implantation du dispositif à intérieur d'un véhicule, représenté à la figure 3, chaque passager dispose d'un dispositif de commande 16a, 16b, 16c,

Le dispositif de commande 16 du conducteur est directement relié à une unité centrale 24 du système multimédia. Un écran d'affichage 26 localisé, par exemple, dans la partie centrale de la planche de bord, de façon qu'il soit visible par tous les passagers du véhicule, est aussi relié à l'unité centrale 24. L'unité centrale 24 comporte des moyens d'émission 28 et de réception 30 de façon à communiquer avec les moyens de réception 30a, 30b, 30c et d'émission 28a, 28b, 28c des dispositifs de commande 16a,16b,16c agencés à proximité de chaque passager,

La liaison entre l'unité centrale 24 et les dispositifs de commande 16a, 16b et 16c peut être assurée par des moyens sans fil.

Dans une autre variante, non représentée, chaque passager dispose de son propre écran de façon à améliorer l'ergonomie et la visibilité du dispositif.

Dans une autre variante, non représentée, chaque passager peut, pour sa propre zone, régler individuellement le niveau sonore à partir de la commande déportée.

Ainsi lorsque le passager désire modifier les réglages du système multimédia, le dispositif de commande déporté 16 est facilement accessible. En effet, en posant le bras sur l'accoudoir, le dispositif de commande déporté se trouve naturellement à la portée de la main du passager sans que ce dernier n'ait besoin de faire d'effort particulier, comme par exemple se pencher ou changer de position. Les commandes sont intuitives et simples car seules les fonctions les plus utilisées sont représentées: le passager peut ainsi aisément baisser et augmenter le volume sonore, changer de fréquence radio. Pour les fonctions plus avancées, qui sont utilisées moins souvent, le passager peut utiliser les commandes situées en façade du système multimédia.

Cependant, les fonctions les plus utilisées se trouvant sur la commande déportée, la façade du système multimédia comporte moins de commandes et, par conséquent, est simplifiée et plus facile à utiliser.

De plus, étant donné que le passager peut aussi être de manière régulière ou occasionnelle conducteur, il est habitué à utiliser les commandes d'autoradio situées au volant. Il pourra ainsi bénéficier, lorsqu'il est passager, de commandes ergonomiques présentant la même facilité d'utilisation et de manipulation que celles qu'il utilise lorsqu'il est conducteur.

En outre, cet agencement permet l'utilisation du même type de commande pour le conducteur et pour les passagers, ce qui entraîne une diminution des coûts.

Cet agencement présente aussi l'avantage de ne pas être dangereux pour les passagers en cas d'accident. En effet, le dispositif de commande ne forme pas de saillie nocive puisque sa surface est dans le prolongement de celle du support.

Dans un autre mode de réalisation, non représenté, le dispositif de commande du système multimédia est agencé dans une console du véhicule située dans l'environnement proche du passager.

Dans un autre mode de réalisation, non représenté, le dispositif de commande est agencé sur une partie de planche de bord située à proximité du passager.

## Revendications

1. Agencement d'au moins un dispositif de commande (16, 16a, 16b, 16c) d'un système multimédia à l'intérieur d'un véhicule automobile, **caractérisé en ce que** le dispositif de commande (16,16a,16b,16c) est déporté, par rapport au système multimédia, sur un élément (12) de l'habitacle du véhicule situé à proximité d'un passager et localisé en dehors de la zone dédiée au conducteur de façon que ledit dispositif de commande (16, 16a, 16b, 16c) soit directement à la portée du passager.

2. Agencement selon l'une quelconque des revendications précédentes, **caractérisé en ce que** le dispositif de commande (16,16a,16b,16c) comporte une platine dont une première extrémité est fixée sur l'élément (12) et connectée à des moyens permettant la transmission du signal entre le bouton et le système multimédia et dont une deuxième extrémité libre supporte au moins un moyen de sélection (22a,22b) d'une fonction du système multimédia.

3. Agencement selon la revendication précédente, **caractérisé en ce que** le moyen de sélection est une palette (22a) montée sur la platine de façon qu'elle soit actionnable par une pression exercée sur sa face inférieure.

4. Agencement selon l'une quelconque des revendications 2 ou 3, **caractérisé en ce que** le moyen de sélection est une molette (22b).

5. Agencement selon l'une quelconque des revendications 2 à 4, **caractérisé en ce que** le moyen de sélection est un bouton.

6. Agencement selon l'une quelconque des revendications précédentes, **caractérisé en ce que** l'élément (12) de l'habitacle est un accoudoir.

7. Agencement selon la revendication 1, **caractérisé en ce que** l'élément (12) de l'habitacle est une planche de bord.

8. Agencement selon l'une quelconque des revendications précédentes, **caractérisé en ce que** l'élément (12) de l'habitacle est une console.

9. Système multimédia comportant au moins un dispositif de commande déportée selon les revendications 1 à 8.

10. Véhicule comportant un agencement selon la revendication 1, **caractérisé en ce que** le véhicule comporte une unité centrale (24), reliée à un écran (26) et au dispositif de commande (16), et apte à communiquer par l'intermédiaire de moyens d'émission (28) et de réception (30), avec des moyens d'émission (28a,28b,28c) et de réception (30a,30b,30c) d'au moins un dispositif de commande (16a, 16b, 16c).

11. Véhicule selon la revendication précédente, **caractérisé en ce que** le dispositif de commande (16a,16b,16c) est relié à un écran.
